# EUROPEAN PATENT APPLICATION

(11) **EP 4 442 800 A1**
(43) Date of publication of application: **09.10.2024**
(21) Application number: 22901133.3
(22) Date of filing: 21.11.2022
(51) Int. Cl.: C12G 3/04, C12G 3/06

(54) **ALCOHOLIC BEVERAGE CONTAINING ETHYL PALMITATE**

(30) Priority: 30.11.2021 JP 2021194056
(71) Applicant: Suntory Holdings Limited, Osaka 530-8203 (JP)
(72) Inventor: OSADA, Tomoya, Tokyo 135-8631 (JP); MATSUMOTO, Takehiro, Kawasaki-shi, Kanagawa 211-0067 (JP); ZUSHI, Akane, Kawasaki-shi, Kanagawa 211-0067 (JP); YOSHIHARA, Kazuki, Kawasaki-shi, Kanagawa 211-0067 (JP)
(74) Representative: Vossius & Partner Patentanwälte Rechtsanwälte mbB
(86) International application number: PCT/JP2022/042978
(87) International publication number: WO 2023/100700

(57) **Abstract**

The present invention addresses the problem of reducing the alcohol sensation in alcoholic beverages. The present invention uses ethyl palmitate and limonene and/or capsaicin.

## Description

### TECHNICAL FIELD

The present invention relates to an alcoholic beverage containing ethyl palmitate and specifically to an alcoholic beverage containing ethyl palmitate and limonene and/or capsaicin, and a method related thereto.

### BACKGROUND ART

In alcoholic beverages, a feeling of alcohol such as a feeling of stimulation that alcohol has is often a problem. Some methods for solving such a problem are known. For example, a method using a specified saccharide (PTL 1) and a method using 2,6-nonadienol (PTL 2) are known.

### CITATION LIST

### PATENT LITERATURE

PTL 1: Japanese Patent Laid-Open No. 2019-193602
PTL 2: Japanese Patent Laid-Open No. 2019-201566

### SUMMARY OF INVENTION

### TECHNICAL PROBLEM

An object of the present invention is to reduce a feeling of alcohol in an alcoholic beverage. The object of the present invention is in more detail to reduce the alcohol stimulus of an alcoholic beverage and/or to milden the alcoholic beverage.

### SOLUTION TO PROBLEM

The present inventors have earnestly examined and consequently found that the use of ethyl palmitate in an alcoholic beverage enables reducing a feeling of alcohol. The present inventors have also found that the use of limonene and/or capsaicin in addition to ethyl palmitate may enable further reducing the feeling of alcohol.

The present invention relates to, but is not limited to, the following.
(1) An alcoholic beverage containing ethyl palmitate and limonene and/or capsaicin.
(2) The beverage according to (1), wherein a content of limonene is 1 to 50 ppm, and a content of ethyl palmitate is 1 to 100 ppm.
(3) The beverage according to (1) or (2), wherein the content of limonene is 10 to 50 ppm.
(4) The beverage according to any one of (1) to (3), wherein a content of capsaicin is 1 to 100 ppm, and the content of ethyl palmitate is 1 to 100 ppm.
(5) The beverage according to any one of (1) to (4), wherein the content of capsaicin is 10 to 100 ppm.
(6) The beverage according to any one of (1) to (5), wherein an alcohol content is 1 to 9 %v/v.
(7) The beverage according to any one of (1) to (6) containing carbon dioxide.
(8) The beverage according to any one of (1) to (7), wherein the beverage is a packaged beverage.
(9) A method for reducing a feeling of alcohol in an alcoholic beverage, including:
   a step of mixing raw materials so that the alcoholic beverage contains ethyl palmitate and limonene and/or capsaicin.

### ADVANTAGEOUS EFFECTS OF INVENTION

The present invention enables reducing a feeling of alcohol in an alcoholic beverage. The present invention specifically enables reducing the alcohol stimulus of an alcoholic beverage and/or mildening the alcoholic beverage.

The "alcohol stimulus" as used herein means stimulus resulting from alcohol and tingling the tongue and the throat. The "mildening" in an alcoholic beverage means that the alcohol stimulus is milden.

### DESCRIPTION OF EMBODIMENTS

Hereinafter, an alcoholic beverage containing ethyl palmitate and limonene and/or capsaicin of the present invention and a method related thereto will be described.

Note that the "ppm" as used herein means ppm by weight/volume (w/v), and this is synonymous with "mg/L" unless otherwise specified.

### (Ethyl palmitate)

The beverage of the present invention contains ethyl palmitate. The content thereof is preferably 1 to 100 ppm, more preferably 1 to 50 ppm, and more preferably 10 to 50 ppm.

In the present invention, ethyl palmitate enables reducing a feeling of alcohol. It was known in the past that ethyl palmitate smells like wax. It was a surprising fact that a substance having such a smell enables reducing a feeling of alcohol.

The content of ethyl palmitate may be measured by any known method such as GC-MS, GC, or HPLC method. Hereinafter, a typical example of the GC analytical method will be shown.

### <GC analytical method>

A sample beverage is subjected to gas chromatography analysis (GC) under the following conditions. The analysis conditions for GC are as follows.
GC apparatus: Agilent Technologies GC 6890N
Temperature conditions for GC oven: 40°C (5 min) => 10°C/min => 230°C (10 min)
Column: HP-ULTRA2 (J&W), inner diameter: 0.32 mm, length: 50 m, film thickness 0.52 µm
Split ratio: 15:1
Inlet temperature: 250°C
Detector: FID
Type of gas for evaporating sample: Helium
Detector temperature: 260°C
Injection volume: 2 µl
Identification and quantification: Components and the concentrations thereof are identified by the peak retention times thereof.
Standard substance: Ethyl palmitate
(Limonene)

If the beverage of the present invention contains limonene, the content thereof is preferably 1 to 50 ppm, more preferably 10 to 50 ppm, and more preferably 30 to 50 ppm.

The term "limonene" as used herein means d-limonene. In the present invention, limonene can reduce a feeling of alcohol together with ethyl palmitate.

The content of limonene may be measured by any known method such as GC-MS or HPLC method. Hereinafter, typical analysis conditions for GC-MS will be shown.

### <GC-MS analysis conditions>

A sample beverage is subjected to gas chromatography-mass spectrometry (GC-MS) under the following conditions. The analysis conditions for GC are as follows.
GC apparatus: Agilent Technologies GC-MSD
Temperature conditions for GC oven: 40°C (5 minutes)-6°C/min-240°C
Mass spectrometry (MS) conditions
Set value for quadrupole: 150
Set value for ion source: 230
Conditions for calculating area value
Total ion mode
Mass (LOW): 35
Mass (HIGH): 550
Column: DB-WAXETR 60 m, inner diameter: 320 µm, film thickness: 0.25 µm
Sample pretreatment conditions: 80 µl of a sample is mixed with 20 µl of an internal standard substance (20 ppm aqueous alcoholic solution of methyl decanoate ester) in a 20-mL screw cap vial bottle.
Dynamic headspace conditions
Apparatus: MPS, manufactured by GERSTEL K.K.
Adsorbent: TENAX
Temperature for evaporating sample: 80°C
Volume of gas for evaporating sample fed: 3000 ml
Rate of feed of gas for evaporating sample: 100 ml/min
Type of gas for evaporating sample: Nitrogen
Peak retention time: Components and the concentrations thereof are identified by MS analysis.
Standard substance: Limonene

The beverage of the present invention containing limonene may contain capsaicin, describe below, or may not contain capsaicin.

### (Capsaicin)

If the beverage of the present invention contains capsaicin, the content thereof is preferably 1 to 100 ppm, more preferably 10 to 100 ppm, and more preferably 50 to 100 ppm. The beverage containing capsaicin of the present invention may contain limonene, or may not contain limonene.

In the present invention, capsaicin can reduce a feeling of alcohol together with ethyl palmitate.

The content of capsaicin may be measured by any known method such as GC-MS or HPLC method.

### (Alcohol)

The beverage of the present invention is a beverage containing alcohol, namely an alcoholic beverage. The term "alcohol" as described herein means ethanol unless otherwise specified.

The alcohol percentage of the beverage of the present invention is 1 to 9 %v/v, preferably 3 to 9 %v/v, and further preferably 5 to 9 %v/v. If the alcohol percentage is in the range, a feeling of alcohol is easily reduced.

The alcohol percentage of the beverage herein can be measured by any known method, for example, with a vibrating densimeter. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

Alcohol may be incorporated into the beverage of the present invention by any means. The beverage of the present invention typically contains distilled liquor, and contains alcohol thereby. The distilled liquor is not limited by the raw materials thereof or the method for producing the distilled liquor. Examples of the distilled liquor include whiskey, brandy, spirits (for example, vodka, rum, tequila, gin, and aquavit), neutral spirits, liqueurs, and *shochu.* The distilled liquor is preferably whiskey, brandy, or a neutral spirit.

The type of the alcoholic beverage of the present invention is not particularly limited, but the alcoholic beverage is preferably a highball, *chuhai,* a cocktail, a sour, or the like. If the terms *"chuhai"* and "highball" are used with reference to the beverage of the present invention, the terms mean beverages containing water, distilled liquor, and carbon dioxide. A highball and *chuhai* may further contain fruit juice. If the term "sour" is used with reference to the beverage of the present invention, the term means a beverage containing a spirit, acidic fruit juice of citrus fruits or the like, a sweet component, and carbon dioxide. If the term "cocktail" is used with reference to the beverage of the present invention, the term means an alcoholic beverage made by mixing fruit juice and the like into base liquor.

### (Carbon dioxide)

The beverage of the present invention may contain carbon dioxide. Carbon dioxide can be incorporated into the beverage by a method commonly known to those skilled in the art. Although the method is not limited to the following, for example, carbon dioxide may be dissolved in the beverage under pressure, carbon dioxide may be mixed with the beverage in the piping of a mixer such as a carbonator manufactured by Tuchenhagen GmbH, the beverage may be sprayed in a tank filled with carbon dioxide to make the beverage absorb carbon dioxide, or the beverage may be mixed with carbonated water. These means are appropriately used to regulate the carbon dioxide pressure.

If the beverage of the present invention contains carbon dioxide, the carbon dioxide pressure is not particularly limited, and is preferably 0.7 to 4.5 kgf/cm² and more preferably 0.8 to 2.8 kgf/cm². In the present invention, the carbon dioxide pressure can be measured with the gas volume measuring apparatus GVA-500A, manufactured by Kyoto Electronics Manufacturing Co., Ltd. For example, the sample temperature is adjusted to 20°C, the air in the container in the gas volume measuring apparatus is removed (snift), followed by the shaking, and the carbon dioxide pressure is measured. The carbon dioxide pressure as used herein means carbon dioxide pressure at 20°C unless otherwise specified.

### (Fruit juice or vegetable juice)

The beverage of the present invention may contain fruit juice and/or vegetable juice. The fruit juice may be in any form of straight juice, which is juice squeezed from fruits to be used as it is, or concentrated juice, which is obtained by concentrating the squeezed juice. Transparent fruit juice or cloudy fruit juice can also be used. Whole fruit juice, obtained by crushing whole fruits including the skins of fruits and removing only coarse hard solid matter therefrom, fruit puree, obtained by straining fruits, or fruit juice into which the pulp of dried fruits is crushed or that is extracted from the pulp can also be used. The vegetable juice can also be used in the same form as the form of the above-mentioned fruit juice.

Examples of the type of the fruit juice include, but not particularly limited to, fruit juices of citrus fruits (oranges, satsuma mandarins, grapefruits, lemons, limes, *yuzus, iyokans,* Chinese citrons, *hassakus, ponkan* mandarins, flat lemons, *kabosus,* and the like), pomaceous fruits (apples, Japanese pears, and the like), drupes (peaches, *umes,* apricots, Japanese plums, cherries, and the like), berries (grapes, cassis, blueberries, and the like), tropical and subtropical fruits (pineapples, guavas, bananas, mangos, lychees, and the like), and fruit-like vegetables (strawberries, melons, watermelons, and the like). These juices may be used alone or in combination of two or more. Examples of the type of vegetable juice include tomato juice, corn juice, pumpkin juice, and carrot juice, and the vegetable juices may be used alone or in combination of two or more. The fruit juice may be combined with the vegetable juice.

The content of the fruit juice in the beverage of the present invention is not particularly limited, and is typically 0 to 100 %w/w, or less than 10 %w/w in terms of percent fruit juice content.

In the present invention, the "percent fruit juice content" in a beverage shall be calculated according to the conversion expression mentioned below using the amount (g) of a fruit juice added to 100 g of a sample. Further, calculation of concentration factor shall be made as per the JAS guidelines, with the proviso that the sugar refractometer index for a sugar, honey, or the like added to a fruit juice is excluded. Percent fruit juice content (%w/w) = <Amount of fruit juice added (g)> × <concentration factor>/100 ml/<density of beverage> × 100

The content of the vegetable juice in the beverage of the present invention is not particularly limited, and is typically 0 to 100 %w/w, or less than 10 %w/w. The content of the vegetable juice is calculated in accordance with the content of the fruit juice in terms of the above-mentioned percent fruit juice content.

### (Other components)

As long as the effect of the present invention is not deteriorated, additives such as flavorings, vitamins, dyes, an antioxidant, a preservative, seasonings, extract, a pH adjustor, citric acid, and a quality stabilizer to be commonly blended into beverages can be blended into the beverage in the present invention in addition.

### (Packaged beverage)

The beverage of the present invention can be provided in the form of a packaged beverage. The form of the container includes, but not limited to, metal containers such as cans, PET bottles, cartons, bottles, and pouches. For example, a sterilized packaged product can be produced by a method involving filling a container with the beverage of the present invention, followed by heat sterilization such as retort sterilization or a method involving sterilizing the beverage and filling a container with the sterilized beverage.

### (Method)

The present invention is a method for producing an alcoholic beverage in another aspect. The method includes a step of mixing raw materials so that the alcoholic beverage contains ethyl palmitate and limonene and/or capsaicin. The raw materials include limonene or an ingredient containing limonene (fruit juice, flavoring, and the like) and/or capsaicin or an ingredient containing capsaicin (fruit juice, flavoring, and the like), ethyl palmitate or an ingredient containing ethyl palmitate, water, and other ingredients as necessary. The other raw materials are obvious from the above descriptions of the beverage. The method may include a step of adjusting the content of the limonene in the beverage to 1 to 50 ppm and a step of adjusting the content of ethyl palmitate in the beverage to 1 to 100 ppm, or may include a step of adjusting the content of capsaicin in the beverage to 1 to 100 ppm and adjusting the content of ethyl palmitate in the beverage to 1 to 100 ppm. Since this method enables reducing a feeling of alcohol in the alcoholic beverage, in another aspect, this method is also a method for reducing a feeling of alcohol in the alcoholic beverage.

The method for adjusting the contents of ethyl palmitate and limonene and/or capsaicin in the beverage is obvious from the above descriptions of the beverage. The timing thereof is not limited, either. For example, the above-mentioned steps may be performed at the same time, separately, or in random order. The finally obtained beverage only has to satisfy the above-mentioned conditions. The preferable ranges of the contents of the above-mentioned components are as mentioned above with reference to the beverage. Furthermore, the specific examples and the amounts of additional other components are also as mentioned above with reference to the beverage.

### (Numerical range)

In the description for clarification, the numerical ranges as used herein include their end points, namely the lower limit values and the upper limit values. For example, the range represented by "1 to 2" includes 1 and 2.

### EXAMPLES

Hereinafter, the present invention will be described based on Examples, but the present invention is not limited to these Examples.

### (Method for sensory test)

Four special panelists drank the sample beverages obtained in Test Examples, described below, and evaluated the alcohol stimulus (tingling stimulus), the mildness, and the overall rating thereof on scales of zero to ten to calculate the average values thereof.

Each evaluation was in accordance with the following criteria.

Alcohol stimulus (tingling stimulus):
10: A tingling stimulus is very strongly felt.
8: A tingling stimulus is strongly felt.
6: A tingling stimulus is felt.
4: A tingling stimulus is not quite felt.
2: A tingling stimulus is not felt.
0: A tingling stimulus is not felt at all.

Mildness:
10: The mildness is very strongly felt.
8: The mildness is strongly felt.
6: The mildness is felt.
4: The mildness is not quite felt.
2: The mildness is not felt.
0: The mildness is not felt at all.

Overall rating:
The overall flavor and taste (combined tastes that were peculiar to liquors, including sweetness, bitterness, complex taste, weightiness, a feeling of stimulation, and the like, and felt while the alcoholic beverage is drunk) as liquor were evaluated on a scale of zero to ten.

10: Very good
8: Good
6: Slightly good
4: Narrowly good
2: Not good
0: Not good at all

The panelists established a consensus on the relationship between the scores and the tastes using standard samples corresponding to each of the scores for reducing individual differences in the evaluations. The panelists then performed the evaluation tests.

### (Test Example 1)

Ethyl palmitate was added to an aqueous alcohol solution having an alcohol content of 5 %v/v (control: sample No. 1) in various amounts to prepare sample beverages (sample Nos. 2 to 5). The effect thereof was confirmed. Limonene was further added thereto in various amounts, and the effect thereof was confirmed (sample Nos. 6 to 17). The results are shown below. It was shown that ethyl palmitate reduced a feeling of alcohol. It was also shown that if limonene was added thereto, a feeling of alcohol was further reduced.

**[Table 1]**

| Sample No. | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| Alcohol content (%v/v) | 5 | 5 | 5 | 5 | 5 | 5 | 5 | 5 | 5 | 5 | 5 | 5 | 5 | 5 | 5 | 5 | 5 |
| Limonene (ppm) | 0 | 0 | 0 | 0 | 0 | 10 | 10 | 10 | 10 | 30 | 30 | 30 | 30 | 50 | 50 | 50 | 50 |
| Ethyl palmitate (ppm) | 0 | 1 | 10 | 50 | 100 | 1 | 10 | 50 | 100 | 1 | 10 | 50 | 100 | 1 | 10 | 50 | 100 |
| Anhydrous citric acid (%w/v) | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Tingling stimulus | 6 | 5.5 | 5 | 4.75 | 4.5 | 4.4 | 4.3 | 4.25 | 4.25 | 2.65 | 2.6 | 2.55 | 2.55 | 2.15 | 2.25 | 1.2 | 1.65 |
| Mildness | 1 | 1.5 | 2 | 2.5 | 2.75 | 3 | 3.15 | 3.2 | 3.5 | 6 | 6.15 | 6.2 | 6.1 | 5.6 | 5.55 | 6.75 | 5 |
| Overall rating | 1.5 | 2 | 2.25 | 2.5 | 3 | 3.15 | 3.2 | 3.25 | 3.15 | 6.65 | 6.85 | 6.9 | 6.75 | 7.7 | 7.8 | 9.8 | 7.6 |

An aqueous alcohol solution having an alcohol content of 9 %v/v (control: sample No. 18) was then subjected to the same experiments as mentioned above. The same tendency as mentioned above was observed, and the feeling of alcohol was more greatly reduced.

**[Table 2]**

| Sample No. | 18 | 19 | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|---|---|
| Alcohol content (%v/v) | 9 | 9 | 9 | 9 | 9 | 9 | 9 | 9 | 9 | 9 | 9 | 9 | 9 | 9 | 9 | 9 | 9 |
| Limonene (ppm) | 0 | 0 | 0 | 0 | 0 | 10 | 10 | 10 | 10 | 30 | 30 | 30 | 30 | 50 | 50 | 50 | 50 |
| Ethyl palmitate (ppm) | 0 | 1 | 10 | 50 | 100 | 1 | 10 | 50 | 100 | 1 | 10 | 50 | 100 | 1 | 10 | 50 | 100 |
| Anhydrous citric acid (%w/v) | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Tingling stimulus | 10 | 9 | 8 | 7.5 | 7 | 6.3 | 6.1 | 6 | 6 | 4.8 | 4.7 | 4.6 | 4.6 | 4.8 | 5 | 4.9 | 4.8 |
| Mildness | 1 | 1.5 | 2 | 2.5 | 2.75 | 3.5 | 3.65 | 3.7 | 4 | 5.5 | 5.65 | 5.7 | 5.65 | 4.1 | 4.05 | 4.25 | 4 |
| Overall rating | 2 | 2.5 | 2.75 | 3.5 | 3.25 | 4.15 | 4.2 | 4.25 | 4.15 | 6 | 6.35 | 6.4 | 6.4 | 5.7 | 5.8 | 5.7 | 5.6 |

### (Test Example 2)

When the same experiments as Test Example 1 were performed without using citric acid, the same tendency as in Test Example 1 was observed. The results are shown below.

**[Table 3]**

| Sample No. | 35 | 36 | 37 | 38 | 39 | 40 |
|---|---|---|---|---|---|---|
| Alcohol content (%v/v) | 5 | 5 | 5 | 9 | 9 | 9 |
| Limonene (ppm) | 0 | 0 | 10 | 0 | 0 | 10 |
| Ethyl palmitate (ppm) | 0 | 1 | 1 | 0 | 1 | 1 |
| Tingling stimulus | 5.3 | 4.6 | 3.1 | 9.0 | 8.3 | 5.4 |
| Mildness | 1.0 | 0.9 | 3.0 | 0.7 | 1.4 | 3.2 |
| Overall rating | 1.4 | 1.9 | 4.1 | 1.7 | 2.4 | 4.8 |

### (Test Example 3)

The same tests as Test Example 1 were performed using capsaicin instead of limonene.

Specifically, ethyl palmitate was added to an aqueous alcohol solution having an alcohol content of 5 %v/v (control: sample No. 1) in various amounts to prepare sample beverages (sample Nos. 2 to 5). The effect thereof was confirmed. Capsaicin was further added thereto in various amounts, and the effect thereof was confirmed (sample Nos. 6 to 17). The results are shown below. It was shown that ethyl palmitate reduced a feeling of alcohol. It was also shown that if capsaicin was added thereto, a feeling of alcohol was further reduced.

**[Table 4]**

| Sample No. | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| Alcohol content (%v/v) | 5 | 5 | 5 | 5 | 5 | 5 | 5 | 5 | 5 | 5 | 5 | 5 | 5 | 5 | 5 | 5 | 5 |
| Capsaicin (ppm) | 0 | 0 | 0 | 0 | 0 | 10 | 10 | 10 | 10 | 50 | 50 | 50 | 50 | 100 | 100 | 100 | 100 |
| Ethyl palmitate (ppm) | 0 | 1 | 10 | 50 | 100 | 1 | 10 | 50 | 100 | 1 | 10 | 50 | 100 | 1 | 10 | 50 | 100 |
| Anhydrous citric acid (%w/v) | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Tingling stimulus | 6 | 5.5 | 5 | 4.75 | 4.5 | 4.35 | 4.25 | 4.15 | 4.1 | 3.1 | 2.5 | 2.4 | 2.4 | 3.5 | 2.1 | 2.05 | 3.5 |
| Mildness | 1 | 1.5 | 2 | 2.5 | 2.75 | 2.75 | 2.9 | 2.95 | 3.25 | 4.25 | 5.65 | 5.7 | 5.65 | 2.9 | 2.85 | 3.05 | 2.8 |
| Overall rating | 1.5 | 2 | 2.25 | 2.5 | 3 | 2.95 | 3 | 3.05 | 2.85 | 3.45 | 6.75 | 6.7 | 6.5 | 3.9 | 3.15 | 3 | 3.85 |

An aqueous alcohol solution having an alcohol content of 9 %v/v (control: sample No. 18) was then subjected to the same experiments as mentioned above. The same tendency as the above was observed, and the feeling of alcohol was more greatly reduced.

**[Table 5]**

| Sample No. | 18 | 19 | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|---|---|
| Alcohol content (%v/v) | 9 | 9 | 9 | 9 | 9 | 9 | 9 | 9 | 9 | 9 | 9 | 9 | 9 | 9 | 9 | 9 | 9 |
| Capsaicin (ppm) | 0 | 0 | 0 | 0 | 0 | 10 | 10 | 10 | 10 | 50 | 50 | 50 | 50 | 100 | 100 | 100 | 100 |
| Ethyl palmitate (ppm) | 0 | 1 | 10 | 50 | 100 | 1 | 10 | 50 | 100 | 1 | 10 | 50 | 100 | 1 | 10 | 50 | 100 |
| Anhydrous citric acid (%w/v) | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Tingling stimulus | 10 | 9 | 8 | 7.5 | 7 | 6.95 | 6.75 | 6.75 | 6.75 | 6.5 | 6.4 | 6.3 | 5.9 | 7.4 | 7.5 | 7.45 | 5.85 |
| Mildness | 1 | 1.5 | 2 | 2.5 | 2.75 | 3.7 | 3.85 | 3.9 | 4.2 | 4.7 | 4.85 | 4.85 | 4.85 | 4 | 3.8 | 4 | 4.75 |
| Overall rating | 2 | 2.5 | 2.75 | 3.5 | 3.25 | 3.85 | 3.9 | 3.85 | 3.8 | 3.7 | 4.05 | 3.9 | 5.6 | 3.6 | 3.9 | 3.7 | 5.55 |

### (Test Example 4)

When the same experiments as Test Example 3 were performed without using citric acid, the same tendency as in Test Example 3 was observed. The results are shown below.

**[Table 6]**

| Sample No. | 35 | 36 | 37 | 38 | 39 | 40 |
|---|---|---|---|---|---|---|
| Alcohol content (%v/v) | 5 | 5 | 5 | 9 | 9 | 9 |
| Capsaicin (ppm) | 0 | 0 | 10 | 0 | 0 | 10 |
| Ethyl palmitate (ppm) | 0 | 1 | 1 | 0 | 1 | 1 |
| Tingling stimulus | 5.3 | 4.6 | 3.8 | 9.0 | 8.3 | 5.3 |
| Mildness | 1.0 | 0.9 | 2.8 | 0.7 | 1.4 | 3.4 |
| Overall rating | 1.4 | 1.9 | 3.7 | 1.7 | 2.4 | 4.2 |

## Claims

1. An alcoholic beverage, comprising ethyl palmitate, and limonene and/or capsaicin.

2. The beverage according to claim 1, wherein a content of limonene is 1 to 50 ppm, and a content of ethyl palmitate is 1 to 100 ppm.

3. The beverage according to claim 1 or 2, wherein the content of limonene is 10 to 50 ppm.

4. The beverage according to any one of claims 1 to 3, wherein a content of capsaicin is 1 to 100 ppm, and the content of ethyl palmitate is 1 to 100 ppm.

5. The beverage according to any one of claims 1 to 4, wherein the content of capsaicin is 10 to 100 ppm.

6. The beverage according to any one of claims 1 to 5, wherein an alcohol content is 1 to 9% v/v.

7. The beverage according to any one of claims 1 to 6, comprising carbon dioxide.

8. The beverage according to any one of claims 1 to 7, wherein the beverage is a packaged beverage.

9. A method for reducing a feeling of alcohol in an alcoholic beverage, comprising:
a step of mixing raw materials so that the alcoholic beverage comprises ethyl palmitate and limonene and/or capsaicin.
